# EUROPEAN PATENT APPLICATION

(11) **EP 2 886 274 A1**
(43) Date of publication of application: **24.06.2015**
(21) Application number: 14199378.2
(22) Date of filing: 19.12.2014
(51) Int. Cl.: B27K 3/15, E04F 15/04, B27K 5/06, C08H 8/00, B32B 21/04, B32B 21/12, B32B 21/14, C08L 33/10, C08L 33/12, C08L 71/02

(54) **Wood products impregnated with monomer based compositions**

(30) Priority: 20.12.2013 US 201314137492
(71) Applicant: Armstrong World Industries, Inc., Lancaster, Pennsylvania 17603 (US)
(72) Inventor: Quisenberry, Keith Thomas, Hilliard, OH Ohio 43026 (US); Tian, Dong, Lancaster, PA Pennsylvania 17601 (US); Ross, Jeffrey S., Lancaster, PA Pennsylvania 17603 (US)
(74) Representative: Jenkins, Peter David

(57) **Abstract**

Described herein are impregnated products comprising a cellulosic substrate having internal voids; and a reaction product of a composition comprising: an acrylate monomer; and an acrylated plasticizer; wherein the cellulosic substrate is impregnated with said composition. Methods of making and using the products are also described.

## Description

### Cross-Reference to Related Patent Applications

This application claims the benefit of priority from U.S. Patent Application Serial No. 14/137,492, filed December 20, 2013, the entirety of which is hereby incorporated herein by reference.

### Background

Several approaches have been taken to harden wood products. These attempts have included the application of surface coatings such as varnish and impregnation of the wood with various materials. Success in hardening wood products through impregnation has been limited, in part, by the challenges in being absorbed by the wood. Thus, known impregnated monomer blends fail to sufficiently harden wood surfaces.

An impregnation composition that increases the hardness of a cellulosic material and meets sustainability standards would be desired in the art.

### Summary

Some embodiments of the present invention provide an impregnated product comprising: a cellulosic substrate having internal voids; and a reaction product of a composition comprising: an acrylate monomer; and an acrylated plasticizer; wherein the cellulosic substrate is impregnated with the composition.

Some embodiments of the present invention provide an impregnated product comprising: a cellulosic substrate having internal voids; and a composition comprising: an acrylate monomer; and an acrylated plasticizer; wherein the cellulosic substrate is impregnated with the composition.

Some embodiments of the present invention provide a flooring system comprising a plurality of any one of the impregnated products described herein.

In some embodiments, the impregnation composition comprises a liquid component, wherein the liquid component comprises a biobased component; and a solid component. In some embodiments, the impregnation composition is configured to increase hardness of a cellulosic material.

### Detailed Description

As used herein, the terms "internal void" or "internal voids" refer to cavities within the cellulosic substrate.

As used herein, the term "available internal voids" refers to the cavities within the cellulosic substrate that are able to absorb and retain an impregnation composition.

As used herein, the terms "biobased component" and "biobased material" refer to organic materials having an acrylic or epoxy functional group, which contain an amount of non-fossil carbon sourced from biomass, such as plants, agricultural crops, wood waste, animal waste, fats, and oils, which have a different radioactive C14 signature than those produced from fossil fuels. Biobased materials may not necessarily be derived 100% from biomass. Generally, the amount of biobased content in the biobased material is the amount of biobased carbon in the material or product as a fraction weight (mass) or percentage weight (mass) of total organic carbon in the material or product. ASTM D6866 (2005) describes a test method for determining biobased content.

Some embodiments of the present invention provide an impregnated product comprising: a cellulosic substrate having internal voids; and an impregnation composition comprising: an acrylate monomer; and an acrylated plasticizer; wherein the cellulosic substrate is impregnated with the impregnation composition, wherein the impregnation composition is reacted or activated to produce a polymerized and/or cross-linked composition.

Some embodiments of the present invention provide an impregnated product comprising: a cellulosic substrate having internal voids; and a reaction product of a composition comprising: an acrylate monomer; and an acrylated plasticizer; wherein the cellulosic substrate is impregnated with the composition.

In some embodiments, the cellulosic substrate is derived from the *Acer* genus or *Quercus* genus.

In some embodiments, the acrylated plasticizer comprises greater than about 20 wt. % of the composition. In some embodiments, the acrylated plasticizer comprises about 28 wt. % of the composition. In some embodiments, the acrylated plasticizer comprises acrylated polyethylene glycol. In some embodiments, the acrylated plasticizer comprises acrylated-PEG 600.

Some embodiments provide an impregnation composition comprising a liquid component comprising a biobased material; and a solid component. In some embodiments, the liquid component comprises unsaturated acrylic esters, methacrylic esters, or polyesters having diol moieties that are linear or branched and/or chain-extended. In some embodiments, the liquid component comprises an acrylated monomer and an acrylated plasticizer.

In some embodiments, the biobased material contains an amount of non-fossil carbon sourced from biomass, such as plants, agricultural crops, wood waste, animal waste, fats, and oils, for example, a polyol (e.g. a polyol based on poly 2-hydroxylactate (lactic acid)). In some embodiments, the multi-functional polyester polyol is selected from an acrylic end-capped polylactide, hydroxyl end-capped polylactide, aliphatic-aromatic biobased polyols, acrylated biobased polyols, copolyesters, polyesteramides, lactide, modified polyethylene terephthalate, polyhydroxyalkanoates, polyhydroxybutyrates, polyhydroxyvalerates, polycaprolactone, and polyhydroxybutyrate-hydroxyvalerate copolymers. In another embodiment, the liquid component comprises polymer blends of aliphatic-aromatic copolyesters derived from 1,4-butanediol, aliphatic acid, and dimethylphthalate.

In some embodiments, the impregnation composition comprises an ingredient selected selected from: 1,3-propanediol dimethylacrylate (PDDMA), isobornyl acrylate (IBOA), pentaerythitol triacrylate (PETA), tripropyleneglycol diacrylate (TPGDA), dipentaerythitol triacrylate (DPETA). isodecyl (meth)acrylate, hexanediol di(meth)acrylate, N-vinyl formamide, ethyleneglycol di(meth)acrylate, diethyleneglycol di(meth)acrylate, diethyleneglycol di(meth)acrylate, tetraethylene glycol (meth)acrylate, tripropylene glycol(meth)acrylate, neopentyl glycol di(meth)acrylate, ethoxylated neopentyl glycol di(meth)acrylate, propoxylated neopentyl glycol di(meth)acrylate, trimethylolpropane tri(meth)acrylate, ethoxylated trimethylolpropane tri(meth)acrylate, propoxylated trimethylolpropane tri(meth)acrylate, ethoxylated or propoxylated tripropylene glycol di(meth)acrylate, pentaerythritol tri(meth)acrylate, pentaerythritol tetra(meth)acrylate, tris(2-hydroxy ethyl) isocyanurate tri(meth)acrylate, cyclic trimethylolpropane formal acrylate, ethoxylated(4) bisphenol A dimethacrylate, ethoxylated dimethacrylate, ethoxylated diacrylate, tricyclodecane dimethanol dimethacrylate, 2-phenoxyethyl acrylate, 2-EHA, cylohexane dimethanol (meth)diacrylate, gylcerol tri(meth)acrylate, and 1,4-butanediol di(meth)acrylate.

In some embodiments, the biobased material comprises from about 1% to about 75%, by weight, of the impregnation composition. In some embodiments, the biobased material comprises from about 5% to about 60%, by weight, of the impregnation composition. In some embodiments, the biobased material comprises from about 8% to about 50%, by weight, of the impregnation composition. In some embodiments, the biobased material comprises from about 10% to about 45%, by weight, of the impregnation composition. In some embodiments, the biobased material comprises from about 15% to about 40%, by weight, of the impregnation composition. In some embodiments, the biobased material comprises from about 20% to about 35%, by weight, of the impregnation composition. In some embodiments, the biobased material comprises about 30%, by weight, of the impregnation composition.

In some embodiments, the liquid component further comprises a hydroxy acid of aliphatic or cycloaliphatic dicarboxylic acids including malonic, succinic, glutaric, adipic, pimelic, azelaic, sebacic, fumaric, suberic, itaconic, maleic, citric, tartaric, maleic acid anhydride, 3-hydroxyglutaric acid, trihydroxyglutaric acid, 4-carboxyphthalic anhydride, hydroxyisophthalic acid, trimellitic acid, trimesic acid, pentaerthritol, and trimethlol propane.

In some embodiments, the liquid component comprises an acrylic or methacrylic ester such as methyl acrylate, methyl methacrylate (MMA), n-butyl methacrylate, 2-hydroxyethyl acrylate (HEA), hexanediol diacrylate (HDDA), hexanediol dimethylacrylate (HDDMA), 1,3-propanediol dimethylacrylate (PDDMA), isobornyl acrylate (IBOA), pentaerythitol triacrylate (PETA), tripropyleneglycol diacrylate (TPGDA), and dipentaerythitol triacrylate (DPETA).

In some embodiments, the liquid component comprises water as a solvent. In some embodiments, the water is de-ionized water. In some embodiments, water comprises about 60 percent, by weight, of the liquid component. In some embodiments, water comprises about 65 percent, by weight, of the liquid component. In some embodiments, water comprises about 70 percent, by weight, of the liquid component. In some embodiments, water comprises about 75 percent, by weight, of the liquid component.

In some embodiments, water comprises from about 50 percent to about 80 percent, by weight, of the liquid component. In some embodiments, water comprises from about 55 percent to about 75 percent, by weight, of the liquid component. In some embodiments, water comprises from about 60 percent to about 70 percent, by weight, of the liquid component.

In some embodiments, the liquid component comprises about 40%, by weight, of the impregnation composition. In some embodiments, the liquid component comprises about 50%, by weight, of the impregnation composition. In some embodiments, the liquid component comprises about 60%, by weight, of the impregnation composition. In some embodiments, the liquid component comprises about 70%, by weight, of the impregnation composition. In some embodiments, the liquid component comprises about 75%, by weight, of the impregnation composition. In some embodiments, the liquid component comprises about 80%, by weight, of the impregnation composition.

In some embodiments, the solid component comprises particles of suitable size to mix with the liquid component to form the impregnation composition. In some embodiments, the solid component comprises a particle selected from a metal oxide; a clay; aluminum trihydrate; diamond; silicon carbide; a glass bead; gypsum; limestone; mica; perlite; quartz; sand; talc; and a combination of two or more thereof.

In some embodiments, the solid component comprises a particle having an average particle size of less than about 1 micron. In some embodiments, the solid component comprises a particle having an average particle size greater than about 1 nanometer (nm). In some embodiments, the solid component comprises a particle having an average particle size of greater than about 10 nm. In some embodiments, the solid component comprises a particle having an average particle size of greater than about 50 nm. In some embodiments, the solid component comprises a particle having an average particle size of greater than about 70 nm.

In some embodiments, the solid component comprises a particle having an average particle size between about 1 nm and about 500 nm. In some embodiments, the solid component comprises a particle having an average particle size between about 10 nm and about 400 nm. In some embodiments, the solid component comprises a particle having an average particle size between about 50 nm and about 300 nm. In some embodiments, the solid component comprises a particle having an average particle size between about 100 nm and about 250 nm.

In some embodiments, the solid component comprises a particle having an average particle size between about 1 nm and about 10 nm, between about 10 nm and about 20 nm, between about 20 nm and about 30 nm, between about 30 nm and about 40 nm, between about 40 nm and about 50 nm, between about 50 nm and about 60 nm, between about 60 nm and about 70 nm, between about 70 nm and about 80 nm, between about 80 nm and about 90 nm, between about 90 nm and about 100 nm, between about 1 nm and about 50 nm, between about 50 nm and about 100 nm, between about 30 nm and about 70 nm, at about 10 nm, at about 20 nm, at about 30 nm, at about 40 nm, at about 50 nm, at about 60 nm, at about 70 nm, at about 80 nm, at about 90 nm, at about 100 nm, at 10 nm, at 20 nm, at 30 nm, at 40 nm, at 50 nm, at 60 nm, at 70 nm, at 80 nm, at 90 nm, at 100 nm, or any suitable combination, sub-combination, range, or sub-range therein.

In some embodiments, the solid component comprises a metal oxide. In some embodiments, the composition comprises greater than about 5% of a metal oxide dispersion. In some embodiments, the composition comprises greater than about 10 % of a metal oxide dispersion. In some embodiments, the composition comprises greater than about 15 % of a metal oxide dispersion. In some embodiments, the composition comprises greater than about 20 % of a metal oxide dispersion. In some embodiments, the composition comprises about 20 % of a metal oxide dispersion. In some embodiments, the composition comprises about 21 % of a metal oxide dispersion. In some embodiments, the metal oxide comprises aluminum oxide.

In some embodiments, the acrylate monomer is methylmethacrylate.

In some embodiments, the impregnation composition further comprises a second acrylate monomer. In other embodiments, the second acrylate monomer is selected from hexanediol diacrylate, hexanediol dimethacrylate and tripropylene glycol diacrylate.

In some embodiments, the impregnation composition further comprises a polymerization initiator. In some embodiments, the polymerization initiator is selected from: 2,2'-azobis-(2-methylbutyronitrile), p-toluenesulfonic acid, stannous 2-ethyl hexanoate, and a combination of two or more thereof. In some embodiments, the polymerization initiator comprises 2,2'-azobis-(2-methylbutyronitrile).

In some embodiments, the impregnation composition saturates at least about 25% of the available internal voids of the cellulosic substrate. In some embodiments, the impregnation composition saturates at least about 30% of the available internal voids of the cellulosic substrate. In some embodiments, the impregnation composition saturates at least about 35% of the available internal voids of the cellulosic substrate. In some embodiments, the impregnation composition saturates at least about 40% of the available internal voids of the cellulosic substrate. In some embodiments, the impregnation composition saturates at least about 45% of the available internal voids of the cellulosic substrate. In some embodiments, the impregnation composition saturates at least about 50% of the available internal voids of the cellulosic substrate. In some embodiments, the impregnation composition saturates at least about 55% of the available internal voids of the cellulosic substrate. In some embodiments, the impregnation composition saturates at least about 60% of the available internal voids of the cellulosic substrate. In some embodiments, the impregnation composition saturates at least about 65% of the available internal voids of the cellulosic substrate. In some embodiments, the impregnation composition saturates at least about 70% of the available internal voids of the cellulosic substrate. In some embodiments, the impregnation composition saturates at least about 75% of the available internal voids of the cellulosic substrate. In some embodiments, the impregnation composition saturates at least about 80% of the available internal voids of the cellulosic substrate.

In some embodiments, the product further comprises a flame retardant. In some embodiments, the flame retardant is selected from: boric acid; diammonium phosphate; a chlorinated wax; ammonium borate; and a combination of two or more thereof. In some embodiments, the flame retardant is included in the impregnation composition. In some embodiments, the flame retardant is included in a coating.

Some embodiments of the present invention provide a flooring system comprising a plurality of any one of the impregnated products described herein. Some embodiments provide a system comprising from about 1 to about 15 coatings applied to any one of the impregnated products described herein. Some embodiments provide a system comprising from about 3 to about 12 coatings applied to any one of the impregnated products described herein. Some embodiments provide a system comprising from about 6 to about 10 coatings applied to any one of the impregnated products described herein.

In some embodiments, the coating is selected from: a filler coating; a seal coating; an anti-abrasive coating; and a UV curable coating. In some embodiments, the system provides a reduction in volatile organic compound emission.

Some embodiments comprise an anti-abrasive coating. In some embodiments, the anti-abrasive coating comprises a particle selected from aluminum oxide, corundum, molten corundum, sintered corundum, zirconium corundum, sol-gel corundum, silicon carbide, boron carbide, and a combination of two or more thereof.

In some embodiments, the impregnation composition further comprises a dye, stain, or other colorant. In some embodiments, the impregnation composition comprises a dye, at a concentration, by weight, of about 0.76 percent. In some embodiments, the impregnation composition comprises a dye, at a concentration, by weight, of about 0.81 percent. In some embodiments, the impregnation composition comprises a dye, at a concentration, by weight, of between about 0.60 percent and about 1 percent.

In some embodiments, the impregnation composition further comprises an anti-microbial agent. In some embodiments, the antimicrobial agent inhibits bacterial, fungal, microbial and other pathogen or non-pathogen growth. In some embodiments, the antimicrobial migrates to the coated surface as required, thereby establishing a concentration gradient that controls the growth of microorganisms on contact with the coated surface.

In some embodiments, the antimicrobial agent is selected from: 2,4,4'-trichloro-2'-hydroxydiphenyl ether and polyhexamethylene biguanide hydrochloride (PHMB). Other chemical compounds having known antimicrobial characteristics may also be used in the present invention. In some embodiments, the antimicrobial agent is present at a concentration of from about 0.075% to 3% by weight. In some embodiments, the antimicrobial agent is included in the impregnation composition. In some embodiments, the antimicrobial agent is included in a coating.

In some embodiments, the cellulosic substrate has a thickness of less than one inch. In some embodiments, the cellulosic substrate has a thickness of less than 0.75 inch. In some embodiments, the cellulosic substrate has a thickness of less than 0.5 inch. In some embodiments, the cellulosic substrate has a thickness of less than 0.25 inch. In some embodiments, the cellulosic substrate has a thickness of less than 0.2 inch. In some embodiments, the cellulosic substrate has a thickness of less than 0.1 inch.

In some embodiments, the hardness of the impregnated product is substantially uniform.

In some embodiments, the impregnated product exhibits increased hardness, as demonstrated by indent resistance as compared to untreated wood of the same type. "Indent resistance" may be measured by the force required when a wood product is tested using a Janka impact testing apparatus for performing Janka tests (ASTM D 1037) with measured force to depress a 0.444-inch diameter steel ball to a depth of 0.222 inches into a 1-inch thick sample. Higher values reflect higher indent resistance.

In some embodiments, one inch thick samples fabricated by gluing together impregnated wood veneer substrates corresponding with the impregnated products described herein provide Janka values, for example, of greater than about 3000 lb-force. In some embodiments, 1-inch thick samples fabricated by gluing together impregnated wood veneer substrates corresponding with the impregnated products described herein provide Janka values, for example, of greater than about 3500 lb-force.

### Examples

### Example 1: Exemplary Process for Preparing an Impregnation Composition

A polymerization initiator is weighed out and poured into a first vessel containing an acrylate monomer. The specified amount of acrylated plasticizer is then added to a second vessel. The acrylate monomer is then added to the second vessel. The acrylate monomer, the acrylated plasticizer and the polymerization initiator are then mixed until blended. The mixture is then put back into the first vessel, to which an additional amount of acrylate monomer is added. The contents of the first vessel are mixed until homogeneous.

### Example 2: Exemplary Process for Impregnating a Cellulosic Substrate

Load vessel with cellulosic substrate to be impregnated and secure door. Shut blow off valve and main valve. Open vacuum valve and gauge valve. Start vacuum pump and turn on vacuum gauge. Pull vacuum down to a minimum of 50 mm. Open main valve to pull impregnation composition from first vessel into third vessel. Close main valve and pressurize third vessel with nitrogen to about 20 psi. Soak for about 45 minutes at about 20 psi. Open main valve to blow impregnation composition back into first vessel. Close main valve. Increase pressure to about 40 psi and let drain for about 15 minutes. Open main valve and let remaining impregnation composition drain into first vessel. Increase and maintain pressure in third vessel at 70-80 psi. Introduce steam into the heat jacket of the pressurized third vessel. Leave steam "on" until a cut-off temperature of about 103 °C has been reached. Bleed pressure from third vessel. Cool third vessel with water. Open door and unload third vessel.

### Example 3

1500 gram acrylate monomer-based compositions as described in Table 1 (below) are prepared in accordance with conventional processes, e.g. as described in ***Example 1*** (above). The compositions are then used to impregnate 0.08-inch thick maple veneers. The impregnated veneers are glued and pressed with other veneers of oak and poplar to make a 1-inch thick, sixply sample for the indentation testing.

**Table 1**

| | **Comp. Ex. I** | **Comp. Ex. II** | **Comp. Ex. III** | **I** |
|---|---|---|---|---|
| **Ingredient** | **Wt.% before curing** | | | |
| Methyl methacrylate | 50.44 | 53.69 | 53.69 | 50.44 |
| PEG 600 | 28.19 | 30 | 30 | -- |
| Acrylated PEG 600 | -- | -- | -- | 28.19 |
| Hexanediol dimethacrylate | -- | 15 | 15 | -- |
| 30% dispersion of nanoparticle aluminum oxide in hexanediol dimethacrylate | 20.13 | -- | -- | 20.13 |
| 2,2'-azobis-(2-methylbutyronitrile) | 0.47 | 0.5 | 0.5 | 0.47 |
| Dye | 0.76 | 0.81 | 0.81 | 0.76 |

| | **Janka Test Results (lb-force)** | | | |
|---|---|---|---|---|
| | 2809 | 2633 | 2433 | 3580 |

The data described in Table 1 (above) demonstrates that the inclusion of an acrylated plasticizer in an impregnating composition provides an unexpected improvement in hardness of a cellulosic substrate impregnated therewith. It should be noted that the Janka Test Results reported in Table 1 are an average taken from multiple trials of the respective compositions.

### Example 4

Impregnated veneers comprising the compositions described in Table 2 (below) are prepared consistent with the methods described in Example 3.

**Table 2**

| | **Comp. Ex. IV** | **Comp. Ex. V** | **II** | **III** |
|---|---|---|---|---|
| **Ingredient** | **Wt.% before curing** | | | |
| Methyl methacrylate | 53.69 | 50.44 | 50.44 | 50.44 |
| PEG 600 | 30 | 28.19 | -- | -- |
| Acrylated PEG 600 | -- | -- | 28.19 | 28.19 |
| 30% dispersion of nanoparticle aluminum oxide in tripropylene glycol diacrylate | -- | 20.13 | 20.13 | 20.13 |
| Tripropylene glycol diacrylate | 15 | -- | -- | -- |
| 2,2'-azobis-(2-methylbutyronitrile) | 0.5 | 0.47 | 0.47 | 0.47 |
| Dye | 0.81 | 0.76 | 0.76 | 0.76 |

| | **Janka Test Results (lb-force)** | | | |
|---|---|---|---|---|
| | 2268.1 | 2220.56 | 3689.89 | 3274.67 |

The data described in Table 2 (above) demonstrates that the inclusion of nanoparticles in an impregnating composition comprising an acrylated plasticizer provides an unexpected improvement in hardness of a cellulosic substrate impregnated therewith.

While the invention has been described with reference to preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An impregnated product comprising:
a cellulosic substrate having internal voids; and
a reaction product of a composition comprising:
an acrylate monomer; and
an acrylated plasticizer;
wherein the cellulosic substrate is impregnated with said composition.

2. The product of claim 1, wherein the cellulosic substrate is derived from the *Acer* genus or *Quercus* genus.

3. The product of claim 1 or claim 2, wherein the acrylated plasticizer comprises greater than about 20 wt. % of the composition.

4. The product of any foregoing claim, wherein the acrylated plasticizer comprises acrylated polyethylene glycol.

5. The product of any foregoing claim, wherein the composition further comprises a solid component, optionally wherein the solid component comprises a particle selected from a metal oxide; a clay; aluminum trihydrate; diamond; silicon carbide; a glass bead; gypsum; limestone; mica; perlite; quartz; sand; talc; and a combination of two or more thereof.

6. The product of claim 5, wherein the solid component comprises a particle having a particle size of less than about 1 micron.

7. The product of any foregoing claim, wherein the composition comprises a solid component comprising greater than about 5% of a metal oxide dispersion.

8. The product of any foregoing claim, wherein the composition comprises about 20 % of a metal oxide dispersion.

9. The product of claim 8, wherein the metal oxide dispersion comprises aluminum oxide.

10. The product of any foregoing claim, wherein the acrylate monomer is methylmethacrylate.

11. The product of any foregoing claim, wherein the composition further comprises a second acrylate monomer, optionally wherein the second acrylate monomer is selected from hexanediol diacrylate, hexanediol dimethacrylate and tripropylene glycol diacrylate.

12. The product of any foregoing claim, wherein at least about 50% of the available internal voids of the cellulosic substrate are saturated with the composition.

13. A flooring system comprising a plurality of products according to any foregoing claim.

14. The system of claim 13, wherein at least one of the plurality of products comprises from about 6 to about 10 coatings, optionally wherein at least one of said about 6 to about 10 coatings is an anti-abrasive coating, further optionally wherein the anti-abrasive coating comprises a particle selected from aluminum oxide, corundum, molten corundum, sintered corundum, zirconium corundum, sol-gel corundum, silicon carbide, boron carbide, and a combination of two or more thereof.

15. The system of claim 13 or claim 14, wherein the system provides a reduction in volatile organic compound emission.
